# EUROPÄISCHE PATENTSCHRIFT

(11) **EP 2 775 677 B1**
(45) Veröffentlichungstag und Bekanntmachung des Hinweises auf die Patenterteilung: **29.06.2016**
(21) Anmeldenummer: 14151090.9
(22) Anmeldetag: 14.01.2014
(51) Int. Cl.: H04L 12/721

(54) **Verfahren zur Übertragung von Datenpaketen in einem Datennetz aus einer Vielzahl von Netzknoten**
Method for transmitting data packets in a data network from a plurality of network nodes
Procédé de transmission de paquets de données dans un réseau de données à partir d'une pluralité de noeuds de réseau

(30) Priorität: 08.03.2013 DE 102013204042
(43) Veröffentlichungstag der Anmeldung: 10.09.2014
(73) Patentinhaber: Siemens Aktiengesellschaft, 80333 München (DE)
(72) Erfinder: Scheffel, Matthias, 82008 Unterhaching (DE); Riedl, Johannes, 84030 Ergolding (DE)

(56) Entgegenhaltungen:
- WO-A1-2007/053141
- WO-A2-00/79730
- US-A1- 2010 278 069
- US-A1- 2011 231 573

## Beschreibung

Die Erfindung betrifft ein Verfahren zur Übertragung von Datenpaketen in einem Datennetz aus einer Vielzahl von Netzknoten sowie ein entsprechendes Datennetz.

Aus dem Stand der Technik sind verschiedene Verfahren bekannt, mit denen in einem Datennetz spezifiziert wird, wie Datenpakete von einem Quellknoten über dazwischen liegende Netzknoten zu einem Zielknoten weitergeleitet werden. Insbesondere bei einer Datenübertragung über das Internet-Protokoll auf der L3-Schicht des OSI-Referenzmodells sind sog. Routing-Verfahren zum Weiterleiten von IP-Datenpaketen bekannt. Die Regeln für das Weiterleiten werden durch ein Routing-Protokoll, wie z.B. OSPF (OSPF = Open Shortest Path First) berechnet. Durch Austausch von Signalisierungsnachrichten wird im Datennetz die Information über seine Topologie verbreitet, und jeder Netzknoten berechnet für sich den kürzesten Weg zu jedem anderen Netzknoten bzw. daran angeschlossenen Netzen basierend auf Metriken bzw. Kosten, die den Links zwischen benachbarten Netzknoten zugewiesen sind. Dabei soll gewährleistet werden, dass das Routing so beeinflusst wird, dass Datenpakete nur entlang von bestimmten kürzesten Pfaden weitergeleitet werden, um Überlastsituationen zu vermeiden.

Bei dem oben erwähnten OSPF-Routing werden über entsprechende Metriken die zur Weiterleitung von Datenpaketen am besten geeigneten Pfade festgelegt. Hierdurch wird das Weiterleiten der Datenpakete jedoch nur indirekt beeinflusst, und alle Datenpakete zwischen zwei Netzknoten folgen in der Regel immer dem gleichen Pfad.

Zur Steuerung der Weiterleitung von Datenpaketen auf verschiedenen Pfaden ist aus dem Stand der Technik das sog. MPLS-Protokoll (MPLS = Multi Protocol Label Switching) bekannt. Dabei handelt es sich um eine Netztechnologie unterhalb der IP-Schicht, über welche Pfade im Netz signalisiert werden. Die Zuordnung von IP-Paketen zu Pfaden erfolgt durch Voranstellen eines Labels vor dem IP-Header, das an den Zwischenknoten ausgewertet wird. Zwar ermöglicht dieses Verfahren eine Spezifikation von bestimmten Routing-Pfaden, jedoch wird hierfür ein aufwändiges separates Protokoll benötigt.

Das Dokument US 2010/278069 A1 offenbart ein Verfahren zum Auffinden von Pfaden zur Weiterleitung von Daten in einem Datennetz aus einer Vielzahl von Netzknoten, wobei QoS-Anforderungen an die Datenübertragung bei der Ermittlung der Pfade berücksichtigt werden.

Aufgabe der Erfindung ist es, ein Verfahren zur Übertragung von Datenpaketen in einem Datennetz zu schaffen, mit dem einfach und flexibel Pfade zur Weiterleitung von Datenpaketen zwischen den Netzknoten konfiguriert werden können.

Diese Aufgabe wird durch die unabhängigen Patentansprüche gelöst. Weiterbildungen der Erfindung sind in den abhängigen Ansprüchen definiert.

Das erfindungsgemäße Verfahren dient zur Übertragung von Datenpaketen in einem Datennetz aus einer Vielzahl von Netzknoten. In einem Schritt a) des Verfahrens wird für einen jeweiligen Netzknoten zumindest eines Teils der Netzknoten und insbesondere für einen jeweiligen Netzknoten von zumindest zwei Netzknoten des Datennetzes eine dem jeweiligen Netzknoten zugeordnete Routing-Topologie mit einer eindeutigen Identifikation ermittelt, wobei die Routing-Topologie Pfade zum Weiterleiten von Datenpaketen zwischen dem jeweiligen Netzknoten und jedem anderen Netzknoten in dem Datennetz basierend auf Links zwischen benachbarten Netzknoten beschreibt.

Der Schritt a) kann mit an sich bekannten Routing-Verfahren bzw. Routing-Protokollen durchgeführt werden. Insbesondere kann das eingangs erwähnte OSPF-Verfahren zur Bestimmung von kürzesten Pfaden in dem Datennetz verwendet werden.

In einem Schritt b) des erfindungsgemäßen Verfahrens wird für die in Schritt a) ermittelten Routing-Topologien jeweils für jeden Netzknoten eine Routing-Information (insbesondere in der Form einer Routing-Tabelle) mit der Identifikation der jeweiligen Routing-Topologie erzeugt und in dem jeweiligen Netzknoten hinterlegt. Diese Routing-Information enthält für jeden Zielnetzknoten, der in einem von dem jeweiligen Netzknoten auszusendenden Datenpaket spezifizierbar ist, eine Information, welche angibt, an welchen benachbarten Netzknoten das auszusendende Datenpaket in der jeweiligen Routing-Topologie weiterzuleiten ist.

Gemäß Schritt c) des erfindungsgemäßen Verfahrens spezifiziert ein von einem Quellnetzknoten zu einem Zielnetzknoten übertragenes Datenpaket die Identifikation der zur Übertragung zu nutzenden Routing-Topologie, wobei jeder Netzknoten, der das Datenpaket weiterleitet, die bei ihm hinterlegte Routing-Information mit der Identifikation der Routing-Topologie aus dem Datenpaket verwendet.

Die Erfindung ermöglicht auf einfache Weise die Festlegung einer bestimmten Anzahl von Routing-Topologien und darauf basierenden Routing-Informationen, so dass in geeigneter Weise Datenpakete je nach Anwendungsfall über spezielle bzw. unterschiedliche Routing-Topologien weitergeleitet werden können. Im Rahmen der Weiterleitung wird dabei die zur Übertragung zu verwendende Routing-Topologie im entsprechenden Datenpaket spezifiziert.

In einer besonders bevorzugten Ausführungsform werden in dem Datennetz die Datenpakete auf der L3-Schicht des OSI-Referenzmodells übertragen. Insbesondere erfolgt die Übertragung basierend auf dem Internet-Protokoll. Vorzugsweise wird dabei das Internet-Protokoll IPv4 und/oder IPv6 verwendet. Im Falle, dass eine Datenübertragung basierend auf dem IPv6-Protokoll erfolgt, ist in einer weiteren bevorzugten Variante in jedem Datenpaket in einem aus diesem Protokoll bekannten Extension-Header und insbesondere in dem Hop-by-Hop-Options-Extension-Header die Identifikation der zur Übertragung zu nutzenden Routing-Topologien spezifiziert.

In einer weiteren Ausgestaltung des erfindungsgemäßen Verfahrens wird bei der Ermittlung der Routing-Topologien im Falle, dass mehrere unterschiedliche Pfade zum Weiterleiten von Datenpaketen zwischen dem jeweiligen Netzknoten und einem bestimmten anderen Netzknoten bestimmbar sind, nach einem vorbestimmten Kriterium, das für jede zu ermittelnde Routing-Topologie gleich ist, einer der mehreren Pfade als Bestandteil der Routing-Topologie festgelegt.

Sollten die Identifikationen der Routing-Topologien Werte einer Ordinal- bzw. Kardinalskala mit einer Größer-Kleiner-Relation sein, kann das oben beschriebene vorbestimmte Kriterium derart ausgestaltet sein, dass die unterschiedlichen Pfade von Netzknoten zu Netzknoten in die gleiche Richtung (d.h. von dem Startknoten zum Zielknoten der Pfade oder umgekehrt) durchlaufen und dabei die Netzknoten der unterschiedlichen Pfade miteinander verglichen werden, wobei beim Auftreten von zumindest teilweise unterschiedlichen Netzknoten der Pfad mit demjenigen Netzknoten aus den zumindest teilweise unterschiedlichen Netzknoten, dem die Routing-Topologie mit der kleinsten oder größten Identifikation zugeordnet ist, als Bestandteil der Routing-Topologie festgelegt wird. Nichtsdestotrotz können auch beliebige andere Kriterien festgelegt sein, mit denen eine eindeutige Behandlung von mehreren gleichwertigen Pfaden sichergestellt ist. Die mehreren Pfade treten im Falle der Verwendung des OSPF-Verfahrens immer dann auf, wenn Pfade die gleiche Gesamtmetrik bzw. die gleichen Gesamtkosten aufweisen.

In einer weiteren Ausgestaltung des erfindungsgemäßen Verfahrens wird im Falle, dass ein Link in allen in Schritt a) ermittelten Routing-Topologien vorkommt, für einen Netzknoten des Links eine weitere Routing-Topologie mit einer eindeutigen Identifikation ermittelt, welche den Link nicht enthält. Die weitere Routing-Topologie beschreibt analog zu den anderen Routing-Topologien Pfade zum Weiterleiten von Datenpaketen zwischen dem einen Netzknoten des Links und jedem anderen Netzknoten in dem Datennetz basierend auf Links zwischen benachbarten Netzknoten. Das Kriterium, gemäß dem festgelegt wird, welchen der beiden Netzknoten des ausgefallenen Links die weitere Routing-Topologie zugeordnet wird, kann beliebig ausgestaltet sein. Zum Beispiel kann dem Netzknoten mit der kleineren Netzwerkadresse die weitere Routing-Topologie zugeordnet werden. Auch für die weitere Routing-Topologie wird für jeden Netzknoten die Routing-Information gemäß obigem Schritt b) erzeugt und in dem jeweiligen Netzknoten hinterlegt. Dabei kann ein Datenpaket als zur Übertragung zu nutzende Routing-Topologie auch die weitere Routing-Topologie spezifizieren. Mit der soeben beschriebenen Variante des erfindungsgemäßen Verfahrens wird sichergestellt, dass immer eine Routing-Topologie zur Weiterleitung von Datenpaketen verwendet werden kann, welche einen ausgefallenen Link nicht enthält.

In einer weiteren Ausgestaltung des erfindungsgemäßen Verfahrens wird Schritt a) für alle Netzknoten des Datennetzes durchgeführt. Nichtsdestotrotz kann Schritt a) auch nur für einen Teil der Netzknoten des Datennetzes durchgeführt werden. Im Falle, dass die oben beschriebenen Identifikationen aufeinander folgende ganze Zahlen ausgeschlossen Null sind, kann ein entsprechender Teil der Netzknoten über eine Division mit einer vorgegebenen ganzen Zahl bestimmt werden. Dabei wird zunächst für alle Netzknoten des Datennetzes eine Identifikation unabhängig davon festgelegt, ob für den Netzknoten eine Routing-Topologie in Schritt a) ermittelt wird. Schließlich werden die Identifikationen durch eine vorgegebene ganze Zahl ausgeschlossen Null und vorzugsweise kleiner als zumindest ein Teil und insbesondere alle der Identifikationen ganzzahlig dividiert, wobei nur bei einem Restwert von Null die Routing-Topologie für den entsprechenden Netzknoten in Schritt a) ermittelt wird.

Falls ein oder mehrere Links zwischen benachbarten Netzknoten in dem Datennetz ausgefallen sind und/oder gemäß einem oder mehreren Qualitätskriterien eine unzureichende Übertragungsqualität aufweisen, spezifiziert in einer weiteren Variante der Erfindung ein Quellnetzknoten in einem zu übertragenden Datenpaket eine Identifikation einer Routing-Topologie, welche keinen der ausgefallenen Links und/oder der Links mit unzureichender Übertragungsqualität enthält. Auf diese Weise wird sichergestellt, dass die Datenübertragung immer über intakte Links erfolgt.

Neben dem oben beschriebenen Verfahren betrifft die Erfindung ferner ein Datennetz mit einer Vielzahl von Netzknoten zur Übertragung von Datenpaketen, wobei die Netzknoten zur Durchführung des erfindungsgemäßen Verfahrens bzw. einer oder mehrerer bevorzugter Varianten des erfindungsgemäßen Verfahrens ausgestaltet sind.

Die Erfindung umfasst ferner einen Netzknoten, wobei der Netzknoten als Netzknoten des oben beschriebenen Datennetzes konfiguriert ist und somit einen Netzknoten darstellt, der im Rahmen der Durchführung des erfindungsgemäßen Verfahrens eingesetzt werden kann.

Ausführungsbeispiele der Erfindung werden nachfolgend anhand der beigefügten Figuren 1 bis 16 beschrieben.

Es zeigen:
- Fig. 1: eine schematische Darstellung eines Datennetzes, in dem eine Ausführungsform des erfindungsgemäßen Verfahrens durchgeführt wird;
- Fig. 2 bis Fig. 6: verschiedene Routing-Topologien, die gemäß einer Ausführungsform des erfindungsgemäßen Verfahrens für das Datennetz aus Fig. 1 bestimmt werden;
- Fig. 7: den Aufbau eines Datenpakets, welches in einer Variante des erfindungsgemäßen Verfahrens übertragen wird;
- Fig. 8 bis Fig. 10: verschiedene Varianten von Übertragungspfaden, die basierend auf einer Identifikation in einem zu übertragenden Datenpaket unterschiedlich gewählt werden;
- Fig. 11: eine schematische Darstellung eines weiteren Datennetzes, in dem eine Ausführungsform des erfindungsgemäßen Verfahrens durchgeführt wird; und
- Fig. 12 bis Fig. 15: verschiedene Routing-Topologien, die gemäß einer Ausführungsform des erfindungsgemäßen Verfahrens für das Datennetz aus Fig. 11 bestimmt werden; und
- Fig. 16: eine weitere Routing-Topologie, welche zusätzlich für das Datennetz der Fig. 11 aufgrund der Tatsache bestimmt wird, dass ein Link in allen RoutingTopologien aus Fig. 12 bis Fig. 15 vorkommt.

Ausführungsformen der Erfindung werden nachfolgend am Beispiel einer Datenübertragung basierend auf dem Internet-Protokoll Version 6 (abgekürzt IPv6) beschrieben. Die Erfindung kann jedoch auch für andere Protokolle und insbesondere für IPv4 eingesetzt werden. Zur Übertragung von Datenpaketen können im Rahmen der hier beschriebenen Ausführungsform - im Unterschied zum herkömmlichen IP-Routing - mehrere Routing-Tabellen in den entsprechenden Netzknoten des Datennetzes hinterlegt werden, wie im Folgenden näher beschrieben wird.

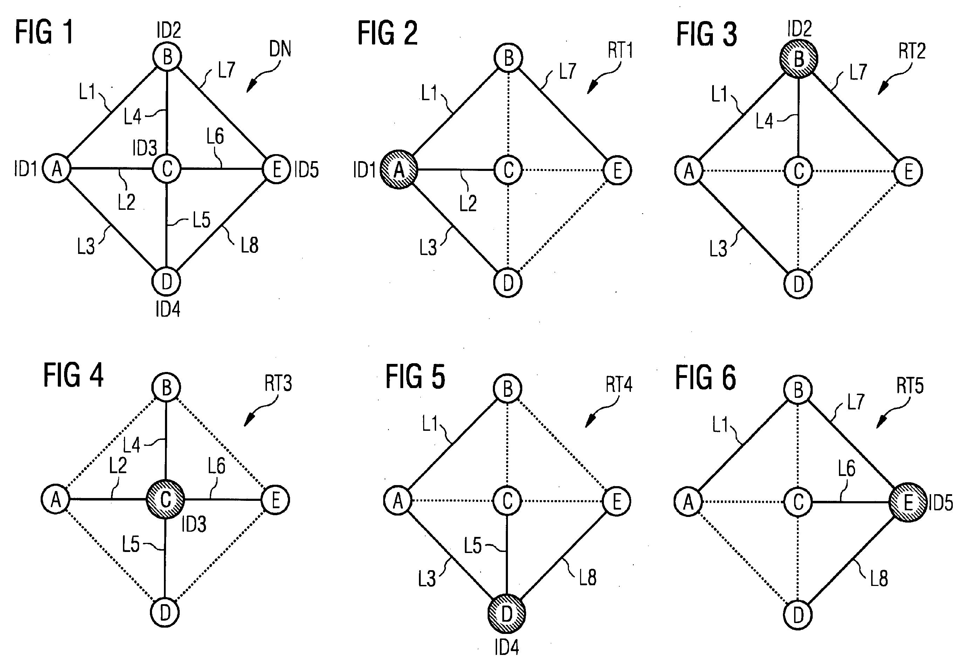

Ein Ausführungsbeispiel des erfindungsgemäßen Verfahrens wird zunächst anhand des in Fig. 1 dargestellten IP-basierten Datennetzes DN beschrieben. Dieses Datennetz umfasst fünf Netzknoten bzw. Router A, B, C, D und E mit entsprechenden IP-Adressen, wobei gemäß der Topologie des Datennetzes benachbarte Netzknoten über entsprechende Links L1 bis L8 miteinander verbunden sind. In dem Datennetz der Fig. 1 wird in an sich bekannter Weise für jeden der einzelnen Netzknoten ein Spannbaum bzw. eine Routing-Topologie bestimmt. Diese lautet für den Netzknoten A RT1, für den Netzknoten B RT2, für den Netzknoten C RT3, für den Netzknoten D RT4 und für den Netzknoten E RT5 (siehe Fig. 2 bis Fig. 6). Jeder der Routing-Topologien RT1 bis RT5 und damit jedem der Netzknoten A bis E ist eine entsprechende Identifikation aus den Identifikationen ID1 bis ID5 zugeordnet.

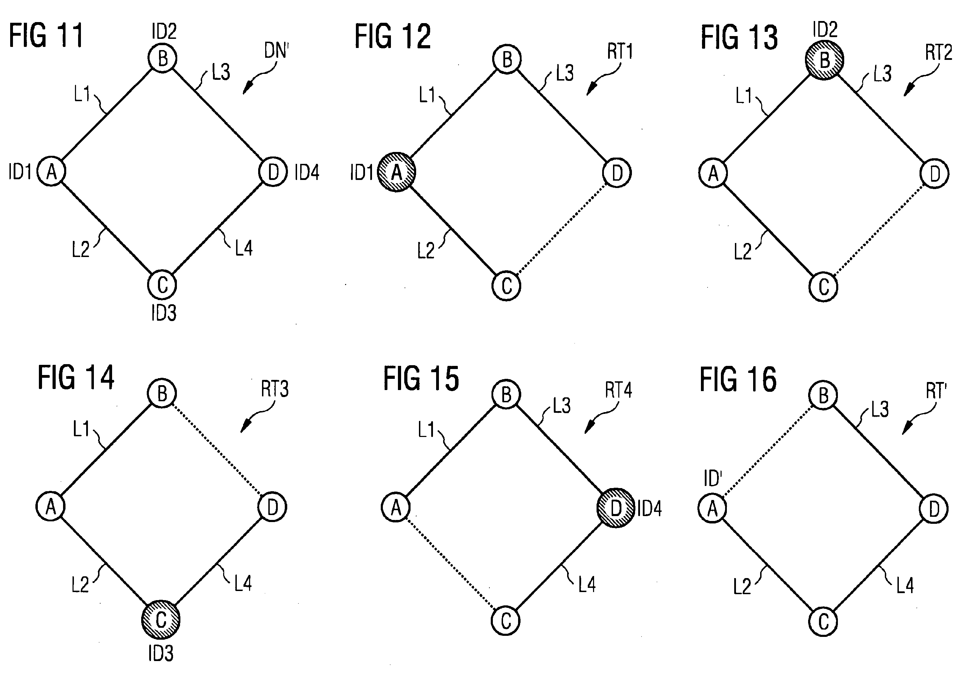

Die Bestimmung der Routing-Topologien für die jeweiligen Netzknoten läuft basierend auf dem OSPF-Verfahren ab. Dieses Verfahren wertet den bekannten Dijkstra-Algorithmus zur Bestimmung der kürzesten Pfade aus. Dabei sind für die einzelnen Links L1 bis L8 entsprechende Metriken festgelegt, wobei der Pfad mit der kürzesten Gesamtmetrik der darin enthaltenen Links zur Übertragung zwischen einem Quellknoten und einem Zielknoten genutzt wird. In dem Datennetz der Fig. 1 und auch in dem weiter unter beschriebenen Datennetz der Fig. 11 weisen alle Links die Metrik von 1 auf. Hieraus ergeben sich mit dem OSPF-Verfahren für die einzelnen Netzknoten die in Fig. 2 bis Fig. 6 gezeigten Routing-Topologien RT1 bis RT5. In den einzelnen Routing-Topologien sind nur diejenigen Links mit durchgezogenen Linien eingezeichnet, welche in Pfaden enthalten sind, die gemäß der Routing-Topologie zur Übertragung genutzt werden. Nicht genutzte Links sind gepunktet dargestellt. Jede der Routing-Topologien RT1 bis RT5 beschreibt die zu verwendenden Übertragungspfade ausgehend von dem entsprechenden Netzknoten, dem die Routing-Topologie zugeordnet ist, hin zu jedem anderen Netzknoten des Datennetzes. Der einer Routing-Topologie zugeordnete Netzknoten ist in den jeweiligen Fig. 2 bis Fig. 6 zeichnerisch hervorgehoben.

In der Routing-Topologie RT1 gemäß Fig. 2 wird ein Datenpaket vom Knoten A zum Knoten B über den Link L1, vom Knoten A zum Knoten C über den Link L2, vom Knoten A zum Knoten D über den Link L3, und vom Knoten A zum Knoten E über die Links L1 und L7 übertragen. In analoger Weise sind entsprechende Pfade in den Routing-Topologien der Fig. 3 bis Fig. 6 wiedergegeben, ohne dass die entsprechenden Pfade nochmals explizit angegeben werden.

Nach Bestimmung der Routing-Topologien RT1 bis RT5 wird wiederum in an sich bekannter Weise für jede der Routing-Topologien eine entsprechende Routing-Tabelle erstellt, welche ausgehend von dem der jeweiligen Routing-Topologie zugeordneten Netzknoten für jeden Zielknoten bzw. jede Zieladresse im Datennetz festlegt, an welchen nächsten benachbarten Knoten das Datenpaket von dem der jeweiligen Routing-Topologie zugeordneten Netzknoten weiterzuleiten ist. Gemäß Fig. 2 wird somit in der Routing-Tabelle für den Zielknoten B eine Weiterleitung zum Knoten B, für den Zielknoten C eine Weiterleitung zum Knoten C, für den Zielknoten D eine Weiterleitung zum Knoten D und für den Zielknoten E eine Weiterleitung zum Knoten B spezifiziert. Nur im letzteren Fall unterscheidet sich der Knoten in der Routing-Tabelle von dem Zielknoten, da nur in diesem Fall der Übertragungspfad mehr als einen Link enthält. In analoger Weise werden entsprechende Routing-Tabellen für die Routing-Topologien aus Fig. 3 bis Fig. 6 generiert.

In der hier beschriebenen Ausführungsform des erfindungsgemäßen Verfahrens werden nunmehr für die jeweiligen Knoten A bis E zusätzliche Routing-Tabellen basierend auf denjenigen Routing-Topologien generiert, welche nicht dem jeweiligen Netzknoten zugeordnet sind. Dies geschieht dadurch, dass die einem jeweiligen Netzknoten zugeordnete Routing-Topologie aus der Sicht der anderen Knoten ausgewertet wird und hierdurch eine Routing-Tabelle für jeden anderen Knoten bestimmt wird. Jede erzeugte Routing-Tabelle wird dabei über die Identifikation der Routing-Topologie spezifiziert, aus der sie generiert wurde.

Zur Verdeutlichung wird beispielhaft die Erzeugung einer Routing-Tabelle für den Knoten A basierend auf der Routing-Topologie RT2 erläutert. Dabei wird in der Routing-Topologie RT2 nicht der Knoten B, sondern der Knoten A als Quellknoten betrachtet. Hieraus ergibt sich, dass gemäß dieser Routing-Topologie der Pfad zum Knoten B über den Link L1, der Pfad zum Knoten C über die Links L1 und L4, der Pfad zum Knoten D über den Link L3 und der Pfad zum Knoten E über die Links L1 und L7 läuft. Basierend auf diesen spezifizierten Pfaden wird dann die entsprechende Routing-Tabelle generiert. Diese enthält für den Zielknoten B die Adresse des Netzknotens B, für den Zielknoten C die Adresse des Netzknotens B, für den Zielknoten E die Adresse des Netzknotens B und für den Zielknoten D die Adresse des Netzknotens D. In analoger Weise werden entsprechende Routing-Tabellen mit der Identifikation der Topologie RT3 bis RT5 für den Netzknoten A bestimmt. In gleicher Weise werden auch für die anderen Netzknoten mittels der Routing-Topologien, die den anderen Netzknoten nicht zugeordnet sind, die entsprechenden Routing-Tabellen ermittelt.

Bei der Bestimmung der Routing-Topologien RT1 bis RT5 wird ferner ein einheitliches Kriterium festgelegt, wie mit Pfaden verfahren wird, welche die gleiche Gesamtmetrik aufweisen. Das Kriterium ist dabei für alle Routing-Topologien das Gleiche, um eindeutige Routing-Topologien zu erhalten und hierdurch Schleifen bei der Datenübertragung zu vermeiden. In der Ausführungsform der Fig. 1 bis Fig. 6 sind die einzelnen Identifikationen ID1 bis ID5 Werte in aufsteigender Reihenfolge. Dabei wird bei der Ermittlung der Pfade mit dem Dijkstra-Algorithmus die Regel verwendet, dass bei einer Mehrdeutigkeit im Pfad derjenige Knoten selektiert wird, der über den Vorgänger-Knoten mit der niedrigeren Identifikation der Routing-Tabelle erreicht wird. Dies ist z.B. aus Fig. 2 ersichtlich. Dort hat der Pfad über die Links L1 und L7 die gleiche Gesamtmetrik wie der Pfad über die Links L3 und L8. Da jedoch die Identifikation ID2 der dem Knoten B zugeordneten Routing-Topologie RT2 kleiner ist als die Identifikation ID4 der dem Knoten D zugeordneten Routing-Topologie RT4, wird der Pfad über die Links L1 und L7 ausgewählt. In gleicher Weise wurden bei Mehrdeutigkeiten die Pfade in den anderen Topologien festgelegt. Nichtsdestotrotz können gegebenenfalls auch andere Kriterien zur eindeutigen Pfadwahl festgelegt werden. Zum Beispiel können die IP-Adressen der Knoten herangezogen werden. Dabei kann festgelegt sein, dass bei Mehrdeutigkeiten der Pfad mit der geringsten Summe der IP-Adressen seiner Knoten in die Routing-Topologie aufgenommen wird.

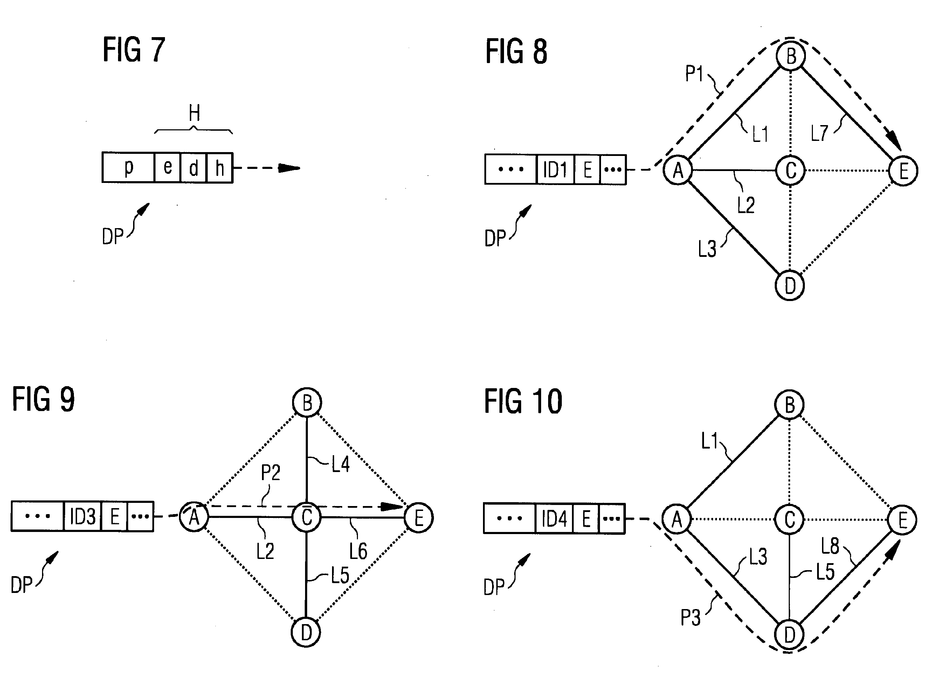

Als Ergebnis liefert das anhand von Fig. 1 bis Fig. 6 beschriebene Verfahren für jeden Netzknoten fünf Routing-Tabellen mit den entsprechenden Identifikationen ID1 bis ID5. Um nunmehr festzulegen, welche der Routing-Tabellen für ein zu übertragendes Datenpaket genutzt werden soll, wird ein sog. Extension-Header des IPv6-Protokolls verwendet. Dies wird im Folgenden anhand von Fig. 7 verdeutlicht.

Fig. 7 zeigt in schematischer Darstellung ein Datenpaket DP gemäß dem Internet-Protokoll IPv6. Dabei ist mit H der Header des Datenpakets bezeichnet. Der an sich bekannte Teil des Headers bis zur Zieladresse d des Datenpakets wird durch das Bezugszeichen h referenziert. In einem sog. Next-Header-Feld innerhalb des Header-Abschnitts h ist festgelegt, dass in dem Datenpakt DP ein Extension-Header verwendet wird. Dieser Header folgt auf die Zieladresse d und ist in Fig. 7 mit dem Bezugszeichen e bezeichnet. An den Extension-Header schließt sich die Nutzlast p des Datenpakets an.

In der hier beschriebenen Ausführungsform wird der sog. Hop-by-Hop-Options-Extension-Header nunmehr dazu verwendet, um darin festzulegen, welche Identifikation einer Routing-Topologie und damit welche Routing-Tabelle beim Weiterleiten des Datenpakets DP genutzt werden soll. Der Extension-Header e enthält somit eine der Identifikationen ID1 bis ID5. Welche Identifikation und damit welche Routing-Tabelle verwendet wird, wurde durch den Quellknoten des Datenpakets DP festgelegt. Im Unterschied zu herkömmlichen Routing-Verfahren wird somit dem Quellknoten die Möglichkeit gegeben, die Datenpakete auf unterschiedlichen Pfaden weiterzuleiten, wenn z.B. ein Ausfall eines Netzknotens im Datennetz auftritt.

Fig. 8 bis Fig. 10 verdeutlichen die Übertragung eines Datenpakets DP von dem Knoten A hin zu dem Knoten E über verschiedene Routing-Topologien aus den Figuren 1 bis 6. Alle Datenpakete DP der Fig. 8 bis Fig. 10 enthalten die Zieladresse des Knotens E, unterscheiden sich jedoch in ihren Identifikationen im Extension-Header. Gemäß Fig. 8 wird das Datenpaket basierend auf der Routing-Topologie RT1 übertragen, was bedeutet, dass als Übertragungspfad P1 die Links L1 und L7 verwendet werden. Demgegenüber werden gemäß Fig. 9, bei der die Routing-Topologie mit der Identifikation ID3 spezifiziert ist, die Datenpakete vom Knoten A über den Pfad P2 geleitet, der die Links L2 und L6 enthält. Für das Datenpaket der Fig. 10, welche die Identifikation ID4 enthält, erfolgt die Datenübertragung basierend auf dem Pfad P3, der die Links L3 und L8 umfasst.

Wie bereits oben erwähnt, können die verschiedenen Routing-Topologien dazu verwendet werden, um bei einem Link-Ausfall schnell auf einen alternativen intakten Pfad umzuschalten. Dazu muss das Routing entlang derjenigen Routing-Topologien, welche den betroffenen Link enthalten, durch einen anderen Spannbaum ersetzt werden, der den Link nicht enthält. Ein Ausfall des Links L2 in dem Datennetz DN der Fig. 1 kann sich z.B. potentiell auf das Routing mit den Routing-Topologien RT1 und RT3 auswirken, da diese den Link L2 enthalten. Durch die Verwendung von mehreren Routing-Topologien kann dabei eine Weiterleitung über ausgefallene Links vermieden werden. Soll beispielsweise ein Datenpaket DP zunächst basierend auf Fig. 9 zum Knoten E übertragen werden, wird aufgrund des Ausfalls des Links L2 nicht die Routing-Topologie ID3, sondern beispielsweise die Routing-Topologie mit der Identifikation ID4 aus Fig. 10 verwendet, da dort bei einer Übertragung hin zum Knoten E der Link L2 nicht im Übertragungspfad enthalten ist.

In den anhand von Fig. 1 bis Fig. 6 beschriebenen Routing-Topologien kommt jeder Link in mindestens einer Routing-Topologie nicht vor, so dass die schnelle Wiederherstellung von Verkehr für jeden Link-Fehler gewährleistet ist. Dies ist jedoch nicht zwangsläufig für alle Topologien gültig. Die Erfindung kann aber derart erweitert werden, dass gegebenenfalls weitere Routing-Topologien eingeführt werden, wenn ein Link in allen ermittelten Routing-Topologien enthalten ist. Die Bestimmung einer weiteren Routing-Topologie wird nachfolgend anhand von Fig. 11 bis Fig. 16 beschrieben.

Fig. 11 zeigt eine Variante eines Datennetzes DN', welches nur vier Netzknoten A bis D und entsprechende Links L1, L2, L3 und L4 zwischen den Knoten enthält. In gleicher Weise, wie anhand von Fig. 1 bis Fig. 6 beschrieben wurde, werden nunmehr für jeden der Knoten A bis D entsprechende Routing-Topologien RT1 bis RT4 basierend auf dem OSPF-Verfahren bestimmt, wie aus Fig. 12 bis 15 ersichtlich ist. Ferner wird für jede Routing-Topologie in jedem der Knoten A bis D eine Routing-Tabelle generiert, so dass eine Weiterleitung von Datenpaketen über verschiedene Routing-Topologien ermöglicht wird. Im Unterschied zu dem Szenario der Fig. 1 bis Fig. 6 ist nunmehr in jeder der Routing-Topologien RT1 bis RT4 der Link L1 enthalten.

Um eine Weiterleitung von Datenpaketen bei Ausfall des Links L1 zu gewährleisten, wird eine weitere Routing-Topologie RT' gemäß Fig. 16 erzeugt, welche nicht mehr den Link L1 enthält. Dies ist in Fig. 16 dadurch angedeutet, dass der Link L1 gestrichelt wiedergegeben ist, was gleichbedeutend damit ist, dass der Link L1 nicht vorhanden ist. Die Routing-Topologie RT' wird einem der Knoten zugeordnet, welche Endpunkte des Links L1 sind, wobei im hier beschriebenen Beispiel der Knoten A verwendet wird, da die Identifikation ID1 seiner Routing-Topologie RT1 einen kleineren Wert aufweist als die dem Knoten B zugeordnete Identifikation ID2 der Routing-Topologie RT2. Für den Knoten A wird dann wiederum in an sich bekannter Weise eine Routing-Tabelle basierend auf der Topologie der Fig. 16 bestimmt. Analog werden auch für die anderen Knoten B bis D entsprechende Routing-Tabellen aus Sicht dieser Knoten basierend auf der Routing-Topologie RT' berechnet. Somit ist in jedem der Netzknoten A bis D eine weitere Routing-Tabelle mit der entsprechenden Identifikation ID' der Routing-Topologie RT' hinterlegt. Diese weitere Routing-Tabelle kann auch zum Weiterleiten von Datenpaketen genutzt werden. Die weitere Routing-Topologie RT' enthält nunmehr nicht mehr den Link L1, so dass im Falle des Ausfalls dieses Links durch Spezifikation der Identität ID' im entsprechenden Datenpaket DP eine Weiterleitung des Datenpakets über andere Links als den ausgefallenen Link L1 sichergestellt ist.

In den Szenarien der Fig. 1 bis Fig. 6 bzw. Fig. 11 bis Fig. 16 wurden Routing-Topologien für jeden Netzknoten in dem Datennetz betrachtet. Bei einer hohen Anzahl von Netzknoten kann es dabei zu Skalierbarkeitsproblemen aufgrund der großen Menge an berechneten Routing-Topologien kommen. In einer Ausführungsform wird dies dadurch vermieden, dass nicht für jeden Knoten eine Routing-Topologie berechnet wird, sondern nur für jeden x-ten (x > 1). Beispielsweise kann dies dadurch erfolgen, dass der Restwert der ganzzahligen Division einer Identifikation des Knotens durch den Wert x ermittelt wird und die entsprechende Routing-Topologie mit den darauf basierenden Bestimmungen der Routing-Tabellen nur bei einem Restwert von 0 angestoßen wird. Die Identifikation des Knotens kann dabei der oben beschriebenen Identifikation der zugeordneten Routing-Topologie entsprechen, wobei die Identifikationen in diesem Fall unabhängig davon vergeben werden, ob die Routing-Topologie tatsächlich ermittelt wird.

Die im Vorangegangenen beschriebenen Ausführungsformen der Erfindung weisen eine Reihe von Vorteilen auf. Insbesondere können auf einfache Weise mehrere Routing-Topologien mit entsprechenden Routing-Tabellen gegenüber einem einzigen Spannbaum bei einem herkömmlichen Routing generiert werden. Dies erlaubt ein flexibles Weiterleiten von Datenpaketen entlang von unterschiedlichen Pfaden. Des Weiteren ist ein schnelles Umschalten beim Auftreten eines Link-Fehlers möglich. Die erforderlichen Erweiterungen im Vergleich zum herkömmlichen OSPF-Routing sind die Vergabe von eindeutigen Kennungen für entsprechende Knoten bzw. zugeordnete Routing-Topologien sowie die Definition eines Datenfeldes, in dem die Routing-Topologie in einem Datenpaket spezifiziert wird. Der herkömmliche Algorithmus zur Berechnung von kürzesten Routing-Pfaden kann dabei wiederverwendet werden.

## Patentansprüche

1. Verfahren zur Übertragung von Datenpaketen (DP) in einem Datennetz (DN, DN') aus einer Vielzahl von Netzknoten (A, B, ..., E), bei dem:
a) für einen jeweiligen Netzknoten (A, B, ..., E) zumindest eines Teils der Netzknoten des Datennetzes (DN, DN') eine dem jeweiligen Netzknoten (A, B, ..., E) zugeordnete Routing-Topologie (RT1, RT2, ..., RT5) mit einer eindeutigen Identifikation (ID1, ID2, ..., ID5) ermittelt wird, wobei die Routing-Topologie (RT1, RT2, ..., RT5) Pfade (P1, P2, P3) zum Weiterleiten von Datenpaketen (DP) zwischen dem jeweiligen Netzknoten (A, B, ..., E) und jedem anderen Netzknoten (A, B, ..., E) in dem Datennetz (DN, DN') basierend auf Links (L1, L2, ..., L8) zwischen benachbarten Netzknoten (A, B, ..., E) beschreibt;
b) für die in Schritt a) ermittelten Routing-Topologien (RT1, RT2, ..., RT5) jeweils für jeden Netzknoten (A, B, ..., E) eine Routing-Information mit der Identifikation (ID1, ID2, ..., ID5) der jeweiligen Routing-Topologie (RT1, RT2, ..., RT5) erzeugt und in dem jeweiligen Netzknoten (A, B, ..., E) hinterlegt wird, wobei die Routing-Information (RT1, RT2, ..., RT5) für jeden Zielnetzknoten, der in einem von dem jeweiligen Netzknoten (A, B, ..., E) auszusendenden Datenpaket (DP) spezifizierbar ist, eine Information enthält, welche angibt, an welchen benachbarten Netzknoten (A, B, ..., E) das auszusendende Datenpaket (DP) in der jeweiligen Routing-Topologie (RT1, RT2, ..., RT5) weiterzuleiten ist;
c) ein von einem Quellnetzknoten zu einem Zielnetzknoten übertragenes Datenpaket (DP) die Identifikation (ID1, ID2, ..., ID5) der zur Übertragung zu nutzenden Routing-Topologie (RT1, RT2, ..., RT5) spezifiziert, wobei jeder Netzknoten (A, B, ..., E), der das Datenpaket (DP) weiterleitet, die bei ihm hinterlegte Routing-Information mit der Identifikation (ID1, ID2, ..., ID5) der Routing-Topologie (RT1, RT2, ..., RT5) aus dem Datenpaket (DP) verwendet.

2. Verfahren nach Anspruch 1, wobei in dem Datennetz (DN, DN') die Datenpakete (DP) auf der L3-Schicht und insbesondere basierend auf dem Internet Protocol, vorzugsweise basierend auf IPv4 und/oder IPv6, übertragen werden.

3. Verfahren nach Anspruch 1 oder 2, wobei in jedem Datenpaket (DP), das basierend auf IPv6 übertragen wird, in einem Extension-Header und insbesondere in dem Hop-by-Hop-Options-Extension-Header die Identifikation der zur Übertragung zu nutzenden Routing-Topologie (RT1, RT2, ..., RT5) spezifiziert ist.

4. Verfahren nach einem der vorhergehenden Ansprüche, wobei die Ermittlung der Routing-Topologien (RT1, RT2, ..., RT5) in Schritt a) basierend auf dem OSPF-Verfahren erfolgt.

5. Verfahren nach einem der vorhergehenden Ansprüche, wobei bei der Ermittlung der Routing-Topologien (RT1, RT2, ..., RT5) in Schritt a) im Falle, dass mehrere unterschiedliche Pfade (P1, P2, P3) zum Weiterleiten von Datenpaketen (DP) zwischen dem jeweiligen Netzknoten (A, B, ..., E) und einem bestimmten anderen Netzknoten (RT1, RT2, ..., RT5) bestimmbar sind, nach einem vorbestimmten Kriterium, das für jede zu ermittelnde Routing-Topologie (RT1, RT2, ..., RT5) gleich ist, einer der mehreren Pfade als Bestandteil der Routing-Topologie (RT1, RT2, ..., RT5) festgelegt wird.

6. Verfahren nach Anspruch 5, **dadurch gekennzeichnet, dass** die Identifikationen (ID1, ID2, ..., ID5) der Routing-Topologien (RT1, RT2, ..., RT5) Werte einer Ordinal- oder Kardinalskala sind und das vorbestimmte Kriterium derart ausgestaltet ist, dass die unterschiedlichen Pfade (P1, P2, P3) von Netzknoten zu Netzknoten in die gleiche Richtung durchlaufen und dabei die Netzknoten (A, B, ..., E) der unterschiedlichen Pfade (P1, P2, P3) miteinander verglichen werden, wobei beim Auftreten von zumindest teilweise unterschiedlichen Netzknoten (A, B, ..., E) der Pfad (P1, P2, P3) mit demjenigen Netzknoten (A, B, ..., E) aus den zumindest teilweise unterschiedlichen Netzknoten (A, B, ..., E), dem die Routing-Topologie (RT1, RT2, ..., RT5) mit der kleinsten oder größten Identifikation (ID1, ID2, ..., ID5) zugeordnet ist, als Bestandteil der Routing-Topologie (RT1, RT2, ..., RT5) festgelegt wird.

7. Verfahren nach einem der vorhergehenden Ansprüche, bei dem im Falle, dass ein Link (L1, L2, ..., L8) in allen in Schritt a) ermittelten Routing-Topologien (RT1, RT2, ..., RT5) vorkommt, für einen Netzknoten (A, B, ..., E) des Links (L1, L2, ..., L8) eine weitere Routing-Topologie (RT') mit einer eindeutigen Identifikation (ID') ermittelt wird, welche den Link (L1) nicht enthält, wobei die weitere Routing-Topologie (RT1, RT2, ..., RT5) Pfade (P1, P2, P3) zum Weiterleiten von Datenpaketen (DP) zwischen dem einen Netzknoten (A, B, ..., E) des Links (L1) und jedem anderen Netzknoten (A, B, ..., E) in dem Datennetz (DN, DN') basierend auf Links (L1, L2, ..., L8) zwischen benachbarten Netzknoten (A, B, ..., E) beschreibt, wobei auch für die weitere Routing-Topologie (RT') für jeden Netzknoten (A, B, ..., E) die Routing-Information gemäß Schritt b) erzeugt und in dem jeweiligen Netzknoten (A, B, ..., E) hinterlegt wird und wobei ein Datenpaket (DP) als zur Übertragung zu nutzende Routing-Topologie (RT1, RT2, ..., RT5) auch die weitere Routing-Topologie (RT') spezifizieren kann.

8. Verfahren nach einem der vorhergehenden Ansprüche, bei dem Schritt a) für alle Netzknoten (A, B, ..., E) des Datennetzes (DN, DN') durchgeführt wird.

9. Verfahren nach einem der vorhergehenden Ansprüche, bei dem Schritt a) für einen Teil der Netzknoten (A, B, ..., E) des Datennetzes (DN, DN') durchgeführt wird.

10. Verfahren nach Anspruch 9, bei dem die Identifikationen (ID1, ID2,...., ID5) aufeinander folgende ganze Zahlen ausgeschlossen Null sind, wobei für alle Netzknoten (A, B, ..., E) des Datennetzes (DN, DN') eine Identifikation (ID1, ID2, ..., ID5) einer Routing-Topologie (RT1, RT2, ..., RT5) unabhängig davon festgelegt wird, ob für den Netzknoten (A, B, ..., E) die Routing-Topologie (RT1, RT2, ..., RT5) in Schritt a) ermittelt wird, wobei die Identifikationen (ID1, ID2, ..., ID5) durch eine vorgegebene ganze Zahl ausgeschlossen Null ganzzahlig dividiert werden und nur bei einem Restwert von Null die Routing-Topologie (RT1, RT2, ..., RT5) für den entsprechenden Netzknoten (A, B, ..., E) in Schritt a) ermittelt wird.

11. Verfahren nach einem der vorhergehenden Ansprüche, bei dem im Falle, dass ein oder mehrere Links (L1, L2, ..., L8) zwischen benachbarten Netzknoten (L1, L2, ..., L8) in dem Datennetz (DN, DN') ausgefallen sind und/oder gemäß einem oder mehreren Qualitätskriterien eine unzureichende Übertragungsqualität aufweisen, ein Quellnetzknoten in einem zu übertragenden Datenpaket (DP) eine Identifikation (ID1, ID2, ..., ID5) einer Routing-Topologie (RT1, RT2, ..., RT5) spezifiziert, welche keinen der ausgefallenen Links (L1, L2, ..., L8) und/oder der Links (L1, L2, ..., L8) mit unzureichender Übertragungsqualität enthält.

12. Datennetz mit einer Vielzahl von Netzknoten (A, B, ..., E) zur Übertragung von Datenpaketen (DP), wobei die Netzknoten (A, B, ..., E) derart ausgestaltet sind, dass ein Verfahren durchführbar ist, bei dem:
a) für einen jeweiligen Netzknoten (A, B, ..., E) zumindest eines Teils der Netzknoten des Datennetzes (DN, DN') eine dem jeweiligen Netzknoten (A, B, ..., E) zugeordnete Routing-Topologie (RT1, RT2, ..., RT5) mit einer eindeutigen Identifikation (ID1, ID2, ..., ID5) ermittelt wird, wobei die Routing-Topologie (RT1, RT2, ..., RT5) Pfade (P1, P2, P3) zum Weiterleiten von Datenpaketen (DP) zwischen dem jeweiligen Netzknoten (A, B, ..., E) und jedem anderen Netzknoten (A, B, ..., E) in dem Datennetz (DN, DN') basierend auf Links (L1, L2, ..., L8) zwischen benachbarten Netzknoten (A, B, ..., E) beschreibt;
b) für die in Schritt a) ermittelten Routing-Topologien (RT1, RT2, ..., RT5) jeweils für jeden Netzknoten (A, B, ..., E) eine Routing-Information mit der Identifikation (ID1, ID2, ..., ID5) der jeweiligen Routing-Topologie (RT1, RT2, ..., RT5) erzeugt und in dem jeweiligen Netzknoten (A, B, ..., E) hinterlegt wird, wobei die Routing-Information (RT1, RT2, ..., RT5) für jeden Zielnetzknoten, der in einem von dem jeweiligen Netzknoten (A, B, ..., E) auszusendenden Datenpaket (DP) spezifizierbar ist, eine Information enthält, welche angibt, an welchen benachbarten Netzknoten (A, B, ..., E) das auszusendende Datenpaket (DP) in der jeweiligen Routing-Topologie (RT1, RT2, ..., RT5) weiterzuleiten ist;
c) ein von einem Quellnetzknoten zu einem Zielnetzknoten übertragenes Datenpaket (DP) die Identifikation (ID1, ID2, ..., ID5) der zur Übertragung zu nutzenden Routing-Topologie (RT1, RT2, ..., RT5) spezifiziert, wobei jeder Netzknoten (A, B, ..., E), der das Datenpaket (DP) weiterleitet, die bei ihm hinterlegte Routing-Information mit der Identifikation (ID1, ID2, ..., ID5) der Routing-Topologie (RT1, RT2, ..., RT5) aus dem Datenpaket (DP) verwendet.

13. Datennetz nach Anspruch 12, welches zur Durchführung eines Verfahrens nach einem der Ansprüche 2 bis 11 eingerichtet ist.

14. Netzknoten, wobei der Netzknoten (A, B, ..., E) als einer der Netzknoten des Datennetzes (DN, DN') gemäß Anspruch 12 oder 13 konfiguriert ist.

## Claims

1. Method for transmitting data packets (DP) in a data network (DN, DN') comprising a multiplicity of network nodes (A, B, ... E), in which:
a) for a respective network node (A, B, ... E) from at least some of the network nodes of the data network (DN, DN'), a routing topology (RT1, RT2, ... RT5) associated with the respective network node (A, B, ... E) and having an explicit identification (ID1, ID2, ... ID5) is ascertained, wherein the routing topology (RT1, RT2, ... RT5) describes paths (P1, P2, P3) for forwarding data packets (DP) between the respective network node (A, B, ... E) and each other network node (A, B, ... E) in the data network (DN, DN') on the basis of links (L1, L2, ... L8) between adjacent network nodes (A, B, ... E);
b) for the routing topologies (RT1, RT2, ... RT5) ascertained in step a), in each case for each network node (A, B, ... E), a piece of routing information with the identification (ID1, ID2, ... ID5) of the respective routing topology (RT1, RT2, ... RT5) is produced and is stored in the respective network node (A, B, ... E), wherein the routing information (RT1, RT2, ... RT5) contains, for each destination network node, which can be specified in a data packet (DP) that is to be sent by the respective network node (A, B, ... E), a piece of information that indicates the adjacent network node (A, B, ... E) to which the data packet (DP) to be sent needs to be forwarded in the respective routing topology (RT1, RT2, ... RT5);
c) a data packet (DP) transmitted from a source network node to a destination network node specifies the identification (ID1, ID2, ... ID5) of the routing topology (RT1, RT2, ... RT5) to be used for the transmission, wherein each network node (A, B, ... E) that forwards the data packet (DP) uses the routing information stored on it with the identification (ID1, ID2, ... ID5) of the routing topology (RT1, RT2, ... RT5) for the data packet (DP).

2. Method according to Claim 1, wherein in the data network (DN, DN') the data packets (DP) are transmitted on the L3 layer and particularly on the basis of the Internet protocol, preferably on the basis of IPv4 and/or IPv6.

3. Method according to Claim 1 or 2, wherein in each data packet (DP) that is transmitted on the basis of IPv6 the identification of the routing topology (RT1, RT2, ... RT5) to be used for the transmission is specified in an extension header and particularly in the hop-by-hop options extension header.

4. Method according to one of the preceding claims, wherein the routing topologies (RT1, RT2, ... RT5) are ascertained in step a) on the basis of the OSPF method.

5. Method according to one of the preceding claims, wherein the ascertainment of the routing topologies (RT1, RT2, ... RT5) in step a) involves, in the event of a plurality of different paths (P1, P2, P3) for forwarding data packets (DP) between the respective network node (A, B, ... E) and a particular other network node (RT1, RT2, ... RT5) being able to be determined, a predetermined criterion that is the same for each routing topology (RT1, RT2, ... RT5) to be ascertained being taken as a basis for stipulating one of the plurality of paths as part of the routing topology (RT1, RT2, ... RT5).

6. Method according to Claim 5, **characterized in that** the identifications (ID1, ID2, ... ID5) of the routing topologies (RT1, RT2, ... RT5) are values from an ordinal or cardinal scale and the predetermined criterion is embodied such that the different paths (P1, P2, P3) from network node to network node run through in the same direction and in this case the network nodes (A, B, ... E) of the different paths (P1, P2, P3) are compared with one another, wherein the occurrence of at least partially different network nodes (A, B, ... E) involves the path (P1, P2, P3) with that network node (A, B, ... E) from the at least partially different network nodes (A, B, ... E) that has the associated routing topology (RT1, RT2, ... RT5) with the smallest or largest identification (ID1, ID2, ... ID5) being stipulated as part of the routing topology (RT1, RT2, ... RT5).

7. Method according to one of the preceding claims, in which, in the event of a link (L1, L2, ... L8) occurring in all the routing topologies (RT1, RT2, ... RT5) ascertained in step a), for a network node (A, B, ... E) of the link (L1, L2, ... L8), a further routing topology (RT') having an explicit identification (ID') that does not contain the link (L1) is ascertained, wherein the further routing topology (RT1, RT2, ... RT5) describes paths (P1, P2, P3) for forwarding data packets (DP) between one network node (A, B, ... E) of the link (L1) and each other network node (A, B, ... E) in the data network (DN, DN') on the basis of links (L1, L2, ... L8) between adjacent network nodes (A, B, ... E), wherein, for the further routing topology (RT') too, for each network node (A, B, ... E), the routing information in accordance with step b) is produced and is stored in the respective network node (A, B, ... E) and wherein a data packet (DP) can also specify the further routing topology (RT') as the routing topology (RT1, RT2, ... RT5) to be used for the transmission.

8. Method according to one of the preceding claims, in which step a) is performed for all the network nodes (A, B, ... E) of the data network (DN, DN').

9. Method according to one of the preceding claims, in which step a) is performed for some of the network nodes (A, B, ... E) of the data network (DN, DN').

10. Method according to Claim 9, in which the identifications (ID1, ID2, ... ID5) are successive integers excluding zero, wherein, for all the network nodes (A, B, ... E) of the data network (DN, DN'), an identification (ID1, ID2, ... ID5) of a routing topology (RT1, RT2, ... RT5) is stipulated independently of whether the routing topology (RT1, RT2, ... RT5) is ascertained for the network node (A, B, ... E) in step a), the identifications (ID1, ID2, ... ID5) being divided on an integer basis by a prescribed integer excluding zero, and the routing topology (RT1, RT2, ... RT5) being ascertained for the relevant network node (A, B, ... E) in step a) only for a remainder of zero.

11. Method according to one of the preceding claims, in which, in the event of one or more links (L1, L2, ... L8) between adjacent network nodes (L1, L2, ... L8) in the data network (DN, DN') having failed and/or having an inadequate transmission quality on the basis of one or more quality criteria, a source network node specifies, in a data packet (DP) to be transmitted, an identification (ID1, ID2, ... ID5) of a routing topology (RT1, RT2, ... RT5) that does not contain any of the failed links (L1, L2, ... L8) and/or of the links (L1, L2, ... L8) with inadequate transmission quality.

12. Data network having a multiplicity of network nodes (A, B, ... E) for transmitting data packets (DP), wherein the network nodes (A, B, ... E) are embodied such that it is possible to perform a method in which:
a) for a respective network node (A, B, ... E) from at least some of the network nodes of the data network (DN, DN'), a routing topology (RT1, RT2, ... RT5) associated with the respective network node (A, B, ... E) and having an explicit identification (ID1, ID2, ... ID5) is ascertained, wherein the routing topology (RT1, RT2, ... RT5) describes paths (P1, P2, P3) for forwarding data packets (DP) between the respective network node (A, B, ... E) and each other network node (A, B, ... E) in the data network (DN, DN') on the basis of links (L1, L2, ... L8) between adjacent network nodes (A, B, ... E);
b) for the routing topologies (RT1, RT2, ... RT5) ascertained in step a), in each case for each network node (A, B, ... E), a piece of routing information with the identification (ID1, ID2, ... ID5) of the respective routing topology (RT1, RT2, ... RT5) is produced and is stored in the respective network node (A, B, ... E), wherein the routing information (RT1, RT2, ... RT5) contains, for each destination network node, which can be specified in a data packet (DP) that is to be sent by the respective network node (A, B, ... E), a piece of information that indicates the adjacent network node (A, B, ... E) to which the data packet (DP) to be sent needs to be forwarded in the respective routing topology (RT1, RT2, ... RT5);
c) a data packet (DP) transmitted from a source network node to a destination network node specifies the identification (ID1, ID2, ... ID5) of the routing topology (RT1, RT2, ... RT5) to be used for the transmission, wherein each network node (A, B, ... E) that forwards the data packet (DP) uses the routing information stored on it with the identification (ID1, ID2, ... ID5) of the routing topology (RT1, RT2, ... RT5) for the data packet (DP).

13. Data network according to Claim 12, which is set up to perform a method according to one of Claims 2 to 11.

14. Network node, wherein the network node (A, B, ... E) is configured as one of the network nodes of the data network (DN, DN') according to Claim 12 or 13.

## Revendications

1. Procédé de transmission de paquets de données (DP) dans un réseau de données (DN, DN') à partir d'une pluralité de noeuds de réseau (A, B, ..., E), dans lequel
a) on détermine pour un noeud de réseau respectif (A, B, ..., E) d'au moins une partie des noeuds de réseau du réseau de données (DN, DN') une topologie de routage (RT1, RT2, ..., RT5) associée au noeud de réseau respectif (A, B, ..., E) avec une identification univoque (ID1, ID2, ..., ID5), dans lequel la topologie de routage (RT1, RT2, ..., RT5) décrit des chemins (P1, P2, P3) pour la retransmission de paquets de données (DP) entre le noeud de réseau respectif (A, B, ..., E) et chaque autre noeud de réseau (A, B, ..., E) du réseau de données (DN, DN') en se basant sur des liens (L1, L2, ..., L8) entre des noeuds de réseau voisins (A, B, ..., E);
b) on produit pour les topologies de routage (RT1, RT2, ..., RT5) déterminées à l'étape a) respectivement pour chaque noeud de réseau (A, B, ..., E) une information de routage avec l'identification (ID1, ID2, ..., ID5) de la topologie de routage respective (RT1, RT2, ..., RT5) et on la stocke dans le noeud de réseau respectif (A, B, ..., E), dans lequel l'information de routage (RT1, RT2, ..., RT5) contient, pour chaque noeud de réseau cible, qui peut être spécifié dans un paquet de données (DP) à envoyer du noeud de réseau respectif (A, B, ..., E), une information qui indique à quel noeud de réseau voisin (A, B, ..., E) le paquet de données à envoyer (DP) doit être retransmis dans la topologie de routage respective (RT1, RT2, ..., RT5) ;
c) un paquet de données (DP) transmis d'un noeud de réseau source à un noeud de réseau cible spécifie l'identification (ID1, ID2, ..., ID5) de la topologie de routage (RT1, RT2,..., RT5) à utiliser pour la transmission, dans lequel chaque noeud de réseau (A, B, .., E), qui retransmet le paquet de données (DP), utilise l'information de routage stockée en lui avec l'identification (ID1, ID2, ..., ID5) de la topologie de routage (RT1, RT2, ..., RT5) à partir du paquet de données (DP).

2. Procédé selon la revendication 1, dans lequel on transmet dans le réseau de données (DN, DN') les paquets de données (DP) sur la couche L3 et en particulier en se basant sur le protocole Internet, en se basant de préférence sur le protocole IPv4 et/ou IPv6.

3. Procédé selon la revendication 1 ou 2, dans lequel l'identification de la topologie de routage (RT1, RT2, ..., RT5) à utiliser pour la transmission est spécifiée dans chaque paquet de données (DP), qui est transmis en se basant sur IPv6, dans un en-tête d'extension, et en particulier dans un en-tête d'extension d'option sauts après sauts.

4. Procédé selon l'une quelconque des revendications précédentes, dans lequel la détermination des topologies de routage (RT1, RT2, ..., RT5) est effectuée à l'étape a) en se basant sur le procédé OSPF.

5. Procédé selon l'une quelconque des revendications précédentes, dans lequel, lors de la détermination des topologies de routage (RT1, RT2, ..., RT5) à l'étape a) dans le cas où plusieurs chemins différents (P1, P2, P3) pour la retransmission de paquets de données (DP) entre le noeud de réseau respectif (A, B, ..., E) et un autre noeud déterminé (RT1, RT2, ..., RT5) peuvent être déterminés selon un critère prédéterminé, qui est le même pour chacune des topologies de routage à déterminer (RT1, RT2, ..., RT5), on fixe un des multiples chemins comme composant de la topologie de routage (RT1, RT2, ..., RT5).

6. Procédé selon la revendication 5, **caractérisé en ce que** les identifications (ID1, ID2, ..., ID5) des topologies de routage (RT1, RT2, ..., RT5) sont des valeurs d'une échelle ordinale ou cardinale et le critère prédéterminé est configuré de telle manière que les différents chemins (P1, P2, P3) de noeud de réseau à noeud de réseau progressent dans la même direction et que les noeud de réseau (A, B, ..., E) des différents chemins (P1, P2, P3) soient en l'occurrence comparés les uns aux autres, dans lequel, en cas d'apparition de noeuds au moins partiellement différents (A, B, ..., E), le chemin (P1, P2, P3) avec le noeud de réseau (A, B, ..., E) parmi les noeuds de réseau (A, B, ..., E) au moins partiellement différents, auquel est associée la topologie de routage (RT1, RT2, ..., RT5) avec la plus petite ou la plus grande identification (ID1, ID2, ..., ID5), est fixé comme composant de la topologie de routage (RT1, RT2, ..., RT5).

7. Procédé selon l'une quelconque des revendications précédentes, dans lequel, dans le cas où un lien (L1, L2, ..., L8) se présente dans toutes les topologies de routage (RT1, RT2, ..., RT5) déterminées à l'étape a), on détermine pour un noeud de réseau (A, B, ..., E) du lien (L1, L2,..., L8) une autre topologie de routage (RT') avec une identification univoque (ID'), qui ne contient pas le lien (L1), dans lequel l'autre topologie de routage (RT1, RT2, ..., RT5) décrit des chemins (P1, P2, P3) pour la retransmission de paquets de données (DP) entre ledit un noeud de réseau (A, B, ..., E) du lien (L1) et chaque autre noeud de réseau (A, B, ..., E) dans le réseau de données (DN, DN') en se basant sur des liens (L1, L2, ..., L8) entre des noeuds de réseau voisins (A, B, ..., E), dans lequel on produit aussi pour l'autre topologie de routage (RT') pour chaque noeud de réseau (A, B, ..., E) l'information de routage selon l'étape b) et on la stocke dans le noeud de réseau respectif (A, B, ..., E) et dans lequel un paquet de données (DP) peut aussi spécifier l'autre topologie de routage (RT') comme topologie de routage (RT1, RT2, ..., RT5) à utiliser pour la transmission.

8. Procédé selon l'une quelconque des revendications précédentes, dans lequel on exécute l'étape a) pour tous les noeuds de réseau (A, B, ..., E) du réseau de données (DN, DN').

9. Procédé selon l'une quelconque des revendications précédentes, dans lequel on exécute l'étape a) pour une partie des noeuds de réseau (A, B, ..., E) du réseau de données (DN, DN').

10. Procédé selon la revendication 9, dans lequel les identifications (ID1, ID2, ..., ID5) sont des nombres entiers successifs, à l'exception de zéro, dans lequel on fixe pour tous les noeuds de réseau (A, B, ..., E) du réseau de données (DN, DN') une identification (ID1, ID2, ..., ID5) d'une topologie de routage (RT1, RT2, ..., RT5), indépendamment du fait que la topologie de routage (RT1, RT2, ..., RT5) soit déterminée pour les noeuds de réseau (A, B, ..., E) à l'étape a), dans lequel on divise en nombres entiers les identifications (ID1, ID2, ..., ID5) par un nombre entier prédéterminé à l'exception de zéro et on détermine, uniquement pour un reste de zéro, la topologie de routage (RT1, RT2, ..., RT5) pour le noeud de réseau correspondant (A, B, ..., E) à l'étape a).

11. Procédé selon l'une quelconque des revendications précédentes, dans lequel, dans le cas où un ou plusieurs liens (L1, L2, ..., L8) entre des noeuds de réseau voisins (L1, L2, ..., L8) dans le réseau de données (DN, DN') fait/font défaut et/ou présent(nt) une qualité de transmission insuffisante, selon un ou plusieurs critères de qualité, un noeud de réseau source spécifie dans un paquet de données à transmettre (DP) une identification (ID1, ID2, ..., ID5) d'une topologie de routage (RT1, RT2, ..., RT5), qui ne contient aucun des liens défaillants (L1, L2, ..., L8) et/ou des liens (L1, L2, ..., L8) présentant une qualité de transmission insuffisante.

12. Réseau de données comprenant une pluralité de noeuds de réseau (A, B, ..., E) pour la transmission de paquets de données (DP), dans lequel les noeuds de réseau (A, B, ..., E) sont configurés de telle manière qu'il soit possible d'exécuter un procédé, dans lequel
a) on détermine pour un noeud de réseau respectif (A, B, ..., E) d'au moins une partie des noeuds de réseau du réseau de données (DN, DN') une topologie de routage (RT1, RT2, ..., RT5) associée au noeud de réseau respectif (A, B, ..., E) avec une identification univoque (ID1, ID2, ..., ID5), dans lequel la topologie de routage (RT1, RT2, ..., RT5) décrit des chemins (P1, P2, P3) pour la retransmission de paquets de données (DP) entre le noeud de réseau respectif (A, B, ..., E) et chaque autre noeud de réseau (A, B, ..., E) du réseau de données (DN, DN') en se basant sur des liens (L1, L2, ..., L8) entre des noeuds de réseau voisins (A, B, ..., E);
b) on produit pour les topologies de routage (RT1, RT2, ..., RT5) déterminées à l'étape a) respectivement pour chaque noeud de réseau (A, B, ..., E) une information de routage avec l'identification (ID1, ID2, ..., ID5) de la topologie de routage respective (RT1, RT2, ..., RT5) et on la stocke dans le noeud de réseau respectif (A, B, ..., E), dans lequel l'information de routage (RT1, RT2, ..., RT5) contient, pour chaque noeud de réseau cible, qui peut être spécifié dans un paquet de données (DP) à envoyer du noeud de réseau respectif (A, B, ..., E), une information qui indique à quel noeud de réseau voisin (A, B, ..., E) le paquet de données à envoyer (DP) doit être retransmis dans la topologie de routage respective (RT1, RT2, ..., RT5) ;
c) un paquet de données (DP) transmis d'un noeud de réseau source à un noeud de réseau cible spécifie l'identification (ID1, ID2, ..., ID5) de la topologie de routage (RT1, RT2,..., RT5) à utiliser pour la transmission, dans lequel chaque noeud de réseau (A, B, .., E), qui retransmet le paquet de données (DP), utilise l'information de routage stockée en lui avec l'identification (ID1, ID2, ..., ID5) de la topologie de routage (RT1, RT2, ..., RT5) à partir du paquet de données (DP).

13. Réseau de données selon la revendication 12, qui est conçu pour l'exécution d'un procédé selon l'une quelconque des revendications 2 à 11.

14. Noeud de réseau, dans lequel le noeud de réseau (A, B, ..., E) est configuré comme un des noeuds de réseau du réseau de données (DN, DN') selon la revendication 12 ou 13.
